(19) Europäisches Patentamt
European Patent Office
Office européen des brevets

(11) EP 0 625 946 B1

(12) EUROPÄISCHE PATENTSCHRIFT

(45) Veröffentlichungstag und Bekanntmachung des Hinweises auf die Patenterteilung:
**18.09.1996 Patentblatt 1996/38**

(21) Anmeldenummer: **94900753.8**

(22) Anmeldetag: **04.12.1993**

(51) Int. Cl.$^6$: **B60T 8/00**, B62D 6/00

(86) Internationale Anmeldenummer:
**PCT/DE93/01156**

(87) Internationale Veröffentlichungsnummer:
**WO 94/14640 (07.07.1994 Gazette 1994/15)**

# (54) VERFAHREN ZUR REGELUNG DER FAHRZEUGSTABILITÄT

METHOD OF CONTROLLING VEHICLE STABILITY

PROCEDE DE REGULATION DE LA STABILITE D'UN VEHICULE

(84) Benannte Vertragsstaaten:
**DE FR GB SE**

(30) Priorität: **23.12.1992 DE 4243717**

(43) Veröffentlichungstag der Anmeldung:
**30.11.1994 Patentblatt 1994/48**

(73) Patentinhaber: **ROBERT BOSCH GMBH**
**70442 Stuttgart (DE)**

(72) Erfinder:
- **VAN ZANTEN, Anton**
  **D-71254 Ditzingen (DE)**
- **ERHARDT, Rainer**
  **D-70563 Stuttgart (DE)**
- **KOST, Friedrich**
  **D-70806 Kornwestheim (DE)**
- **RUF, Wolf-Dieter**
  **D-73550 Waldstetten (DE)**
- **HARTMANN, Uwe**
  **D-70182 Stuttgart (DE)**
- **EHRET, Thomas**
  **D-77960 Seelbach (DE)**

(56) Entgegenhaltungen:
**EP-A- 0 392 165**
**WO-A-92/05986**
**WO-A-92/05987**
**DE-A- 4 123 234**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 625 946 B1

Printed by Rank Xerox (UK) Business Services
2.13.4/3.4

## Beschreibung

Stand der Technik

Ein Verfahren mit den Merkmalen des Oberbegriffs des Anspruchs 1 ist in der älteren Patentanmeldung 42 29 504.1 (R. 25428) beschrieben, deren Anmeldungsgegenstand wiederum von der DE 37 31 756 A1 ausgeht.

Vorteile der Erfindung

Das neue des im folgenden vorgestellten Verfahrens ist, daß der Wunsch des Fahrers nach Richtungsänderung ebenso wie der nach Fahrverzögerung bzw. -beschleunigung berücksichtigt und gewichtet wird. Der Sollwert wird so berechnet, daß das Fahrzeug schnell auf Lenkwinkeländerungen reagiert und dann einen vom Haftreibbeiwert der Straße abhängigen stabilen Zustand aufrechterhält, bei dem sich der Schwimmwinkel nicht weiter erhöht.

Bei der Erfindung gemäß Anspruch 1 und den Weiterbildungen gemäß den Unteransprüchen werden folgende Vorteile erzielt:

- Berücksichtigung des Fahrerwunsches bei der Aufteilung der vorhandenen Gesamtreifenkraft auf Längs- und Querkraft unter Verwendung von $v_F$, $\delta$, $P_{vor}$, $F_{ges}$;
- Berechnung einer Begrenzung für die Sollgiergeschwindigkeit mit $a_Q$ und $v_F$ zur Sicherstellung der Fahrzeugstabilität;
- Filterung des Giergeschwindigkeitssollwerts zur Anpassung an die Fahrzeugeigendynamik bzw. zur Änderung der Fahrzeugdynamik;
- Unterstützung der Anstellbewegung des Fahrzeugs bei Lenkwinkelerhöhung zum schnelleren Seitenkraftaufbau.

Bei Fahrdynamikregelsystemen zur Verbesserung der Fahrzeugbeherrschbarkeit müssen die zu regelnden Größen festgelegt und für diese dann geeignete Sollwerte bestimmt werden.

Wird die Fahrzeugbewegung nicht räumlich, sondern in einer Ebene betrachtet (Fahrbahn), dann hat das Fahrzeug drei Freiheitsgrade, nämlich Längs- und Quergeschwindigkeit und die Drehgeschwindigkeit um die Hochachse (Giergeschwindigkeit). Die Giergeschwindigkeit hat sich als besonders geeignete Regelgröße erwiesen, da sie mit Sensoren direkt gemessen werden kann und durch Änderung der Radschlupfwerte oder der Schräglaufwinkel und damit durch das Aufbringen von Giermomenten gut steuerbar ist. Die Quergeschwindigkeit des Fahrzeugs ist nur schlecht meßbar. Durch einen Rechenalgorithmus (Beobachter) kann sie jedoch bei bekannter Giergeschwindigkeit geschätzt werden.

Zur Sollwertberechnung von $\omega_{soll}$ werden folgende Rechenoperationen durchgeführt:

Zunächst wird eine stationäre Sollgiergeschwindigkeit berechnet, die vom Lenkwinkel $\delta$ und von der Fahrzeuglängsgeschwindigkeit $v_F$ abhängt.

$$\omega_{soll0} = k \frac{v_F}{L(1 + v_F^2/v_{ch}^2)} \cdot \delta$$

$v_{ch}$ ist dabei die charakteristische Geschwindigkeit des Fahrzeugs, mit der das Maß der Untersteuerungstendenz festgelegt werden kann, ggf. auch abhängig vom Fahrzustand (angetrieben, freirollend, gebremst).

Für stationäre Kreisfahrt läßt sich nun aus der Sollgiergeschwindigkeit eine gewünschte Seitenkraft berechnen:

$$F_{S,W} = m \cdot v_F \cdot \omega_{soll0}$$

mit der Fahrzeugmasse m

Die gewünschte Längskraft läßt sich je nach Gas- bzw. Bremspedalstellung aus den Meßgrößen Vordruck $P_{vor}$ oder Drosselklappenwinkel $\alpha_{DK}$ berechnen. Dabei wird angenommen, daß der Brems- bzw. Antriebswunsch demjenigen bei ungestörter Geradeausfahrt auf hohem Reibbeiwert entspricht.

$$F_{L,W} = f(P_{vor}, \alpha_{DK})$$

Damit kann nun die vom Fahrer gewünschte Gesamtkraft als Vektorsumme berechnet werden.

$$F_{ges,W} = \sqrt{F_{S,W}^2 + F_{L,W}^2}$$

Diese Wunsch-Kraft wird nun zur maximal vorhandenen Kraft in eine Beziehung gesetzt.

1. Möglichkeit

Die resultierenden Reifenkräfte $Fr_i$ an den einzelnen Rädern sind bekannt (s. z. B. gemäß DE 40 30 704-A1). Dann kann aus der Summe aller Reifenkräfte die maximal verfügbare Gesamtkraft abgeschätzt werden. Sie wird dann erreicht, wenn alle Kraftrichtungen parallel sind.

$$F_{ges} = \sum_i |Fr_i|$$

2. Möglichkeit

Die Gesamt-Längskraft $F_L$ und die Gesamt-Querkraft $F_Q$, die über die Reifen auf das Fahrzeug wirken, sind bekannt, z. B. durch die Kenntnis von Längs- und Querbeschleunigung und Fahrzeugmasse. Dann kann die Gesamtkraft wie folgt berechnet werden:

$$F_{ges} = \sqrt{F_L^2 + F_Q^2}$$

Damit ist das Verhältnis von vorhandener zu gewünschter Gesamtkraft:

$$x = \frac{F_{ges}}{F_{ges,w}}$$

Das Verhältnis x wird nun auf Eins begrenzt.

$$x \overset{!}{\leq} 1$$

Der Sollwert $\omega_{soll}$ für die Giergeschwindigkeit $\omega$ ergibt sich dann aus der ursprünglichen Sollgiergeschwindigkeit multipliziert mit dem Faktor x.

$$\omega_{soll} = x \cdot \omega_{soll0}$$

Das heißt, wenn durch die vom Fahrer gewünschte Gierbewegung die vorhandene Gesamtkraft nicht überschritten wird, dann wird diese Soll-Giergeschwindigkeit als Sollwert für die Fahrdynamikregelung übernommen.

Reicht die verfügbare Kraft jedoch nicht aus, um gleichzeitig die gewünschte Bewegungsänderung in Längs- und Querrichtung zu realisieren, dann wird die Soll-Giergeschwindigkeit entsprechend reduziert. Würde das nicht geschehen, dann könnte es infolge ständig zunehmenden Schwimmwinkels zum Schleudern des Fahrzeugs kommen.

Wenn der Seitenkraftwunsch zwar reduziert werden muß, jedoch im Vergleich zum Längskraftwunsch relativ klein ist, dann kann eine lineare Reduzierung mit dem Faktor x zu einer schlechten Fahrzeugbeherrschbarkeit führen. Es ist dann besser, den Seitenkraftwunsch stärker zu berücksichtigen, also den Faktor x anzuheben.

Die bisher beschriebene Methode zur Sollwertberechnung ist vor allem dann geeignet, wenn sich die Reifen in Sättigung befinden, also z. B. bei Vollbremsungen (ABS-Bremsungen).

Eine weitere Möglichkeit den Giergeschwindigkeitssollwert festzulegen, vor allem, wenn kein Verzögerungswunsch vorliegt, ist eine Begrenzung des Rohwerts $\omega_{soll0}$ auf einen Wert, der von der augenblicklichen Fahrzeugquerbeschleunigung abhängt. Dazu wird eine Sollwertbegrenzung $\omega_B$ berechnet.

$$\omega_B = a_Q / v_F$$

mit der Querbeschleunigung $a_Q$

$\omega_B$ ist der Wert für die Giergeschwindigkeit, bei der bei Kurvenfahrt bei konstanter Fahrzeuggeschwindigkeit der Wert des Schwimmwinkels konstant und damit das Fahrzeug stabil bleibt.

Bei Lenkwinkelrücknahme folgt die Giergeschwindigkeit durch die Eigendynamik des Fahrzeugs nicht phasengleich dem Lenkwinkel, sondern mit einer gewissen Verzögerung. Um in solchen und ähnlichen Situationen (Slalom) ein unnötiges Eingreifen des Fahrdynamikregelsystems zu vermeiden, kann durch eine geeignete Tiefpaßfilterung des Giergeschwindigkeitssollwerts eine Phasenangleichung von Ist- und Sollwert erreicht werden. Die Filterparameter können, evtl. modellgestützt, vom Fahrzustand abhängig sein.

Ein Beispiel in zeitdiskreter Ausführung wird nachfolgend dargestellt:

$$\omega_{soll}{}^{k} = F \cdot \omega_{soll}{}^{k} + (1 - F) \cdot \omega_{soll}{}^{k-1}$$

mit Filterkoeffizient $0 < F < 1$

Durch eine solche Filterung kann jedoch auch eine evtl. unbefriedigende Fahrzeugeigendynamik an ein gewünschtes Verhalten angepaßt werden, indem das Fahrdynamikregelsystem durch geeignete Eingriffe an den Rädern die Giergeschwindigkeit entsprechend ändert.

In manchen Situationen, vor allem bei Lenkwinkelanhebung, kann es erwünscht sein, die Fahrzeugreaktion möglichst schnell zu machen und außerdem die Giergeschwindigkeit über den stationären Sollwert hinaus anzuheben, um eine gewisse Anstellung des Fahrzeugs zu erreichen. Diese Schwimmwinkelerhöhung ist notwendig, um die für die gewünschte Seitenkraft notwendigen Schräglaufwinkel an den Reifen einzustellen. Dies kann erreicht werden, indem bei Lenkwinkelzunahme die Sollgiergeschwindigkeit durch ein differenzierendes Filter (DT-Filter) geleitet wird und der Ausgang dieses Filters mit geeigneter Verstärkung zum ursprünglichen Sollwert zuaddiert wird.

Beispiel (zeitdiskret):

$$\omega_{soll}{}^{k} = \omega_{soll}{}^{k} + \omega_{Anstell}{}^{k}$$

mit

$$\omega_{Anstell}{}^{k} = V * (\omega_{Anstell}{}^{k-1} + \omega_{soll}{}^{k} - \omega_{soll}{}^{k-1})$$

mit Vergeßfaktor $V < 1$

Figurenbeschreibung

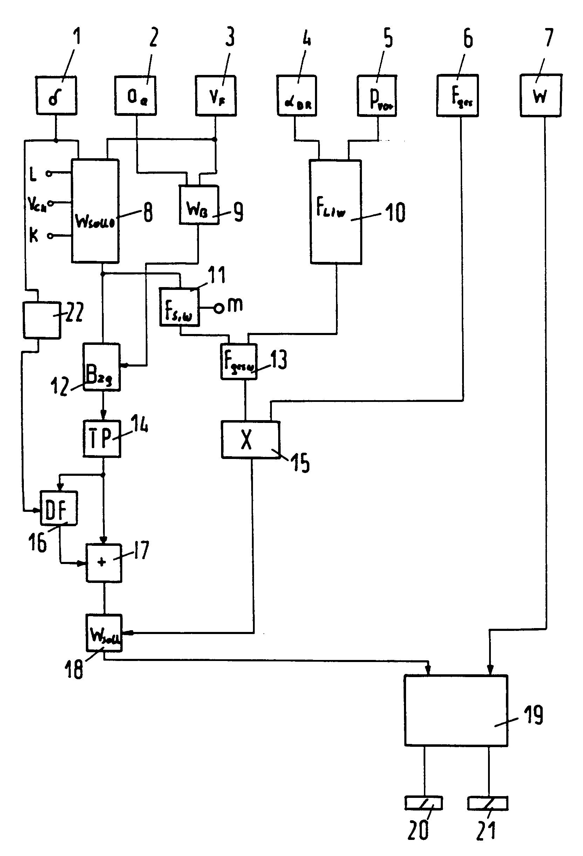

In der Zeichnung ist ein Ausführungsbeispiel der Erfindung in Form eines Blockschaltbildes dargestellt. Natürlich ist auch eine Realisierung mit einem entsprechend programmierten µ-Prozessor möglich.

Die Signale eines Lenkwinkelsensors 1 und eines Fahrzeuggeschwindigkeitsbildners 3 werden einem Block 8 zur Bildung von $\omega_{soll0}$ zugeführt. Diesem Block 8 werden noch die Konstanten L, $V_{ch}$ und K zugeführt. Das $\omega_{soll0}$-Signal wird dann einem Begrenzer 12 zugeführt, der das $\omega_{soll0}$-Signal auf den in einem Block 9 gebildeten Begrenzungswert $\omega_B = a_Q / v_F$ (aus den Blöcken 2 und 3) begrenzt. Das Ausgangssignal des Blocks 12 gelangt dann zu einem Tiefpaß 14 zwecks Phasenangleichung. Normalerweise gelangt dessen Ausgangssignal zu einem Block 18, in dem $\omega_{soll}$ gebil-

det wird. Nimmt jedoch der Betrag des Lenkwinkels zu, was ein Block 22 feststellt, so wird ein differenzierendes Filter 16 wirksam, das ein Anstellsignal $\omega_A$ bildet, das in einer Addierstufe 17 dem $\omega_{soll0}$-Wert überlagert wird. Zur Bildung von $\omega_{soll}$ wird der Faktor x benötigt. Zu dessen Bildung wird in einem Block 10 abhängig von $\alpha_{DR}$ oder $P_{vor}$ die gewünschte Längskraft $F_{L,W}$, in einem Block 11 aus $\omega_{soll0}$ die gewünschte Seitenkraft $F_{S,W}$ und in einem Block 13 aus den Kräften $F_{S,W}$ und $F_{L,W}$ die gewünschte Gesamtkraft $F_{ges,W}$ gewonnen. In einem Block 6 werden in bekannter Weise die tatsächliche Gesamtkraft $F_{ges}$ ermittelt. In einem Block 15 wird dann aus den Kräften $F_{ges}$ und $F_{ges,W}$ deren Verhältnis x gebildet, mit dem im Multiplizierer 18 $\omega_{soll0}$ multipliziert wird. Der erhaltene Giergeschwindigkeitssollwert $\omega_{soll}$ und der in einem Sensor 7 gemessene Giergeschwindigkeitsistwert $\omega$ werden einem Regler 19 zugeführt, der Bremsdrucksteuerventile 20 und 21 im Sinne der Erzeugung eines zusätzlichen Giermoments ansteuert, um den Istwert dem Sollwert anzugleichen.

## Patentansprüche

1. Verfahren zur Regelung der Fahrzeugstabilität, bei dem der Lenkwinkel $\delta$, die Giergeschwindigkeit $\omega$, die Fahrzeuggeschwindigkeit $v_F$ ermittelt werden und bei dem aus den Größen $\delta$ und $v_F$ eine stationäre Sollgiergeschwindigkeit $\omega_{soll0}$ gemäß der Beziehung

$$\omega_{soll0} = K \frac{v_F}{L(1 + v_F^2/V_{ch}^2)} \delta \text{ ermittelt wird,}$$

wobei $V_{ch}$ eine für das Fahrzeug charakteristische Geschwindigkeit und L der Radstand ist, und bei dem der Sollwert der Giergeschwindigkeit $\omega_{soll}$ mit der ermittelten Giergeschwindigkeit $\omega$ verglichen wird und mit Hilfe der Abweichung $\Delta\omega$ eine Beeinflussung der Giergeschwindigkeit im Sinne einer Angleichung an die Sollgiergeschwindigkeit durchgeführt wird, dadurch gekennzeichnet, daß ein Faktor x ermittelt wird, mit dem die stationäre Giergeschwindigkeit $\omega_{soll0}$ zur Gewinnung der Sollgiergeschwindigkeit $\omega_{soll}$ multipliziert wird, daß der Faktor x durch die Beziehung

$$x = \frac{F_{ges}}{F_{ges,W}} \text{ ermittelt wird,}$$

wobei $F_{ges}$ die verfügbare Gesamtkraft zwischen Reifen und Straße ist und $F_{ges,W}$ die vom Fahrer gewünschte Gesamtkraft ist, daß $F_{ges,W}$ durch die Beziehung

$$F_{ges,W} = \sqrt{F_{S,W}^2 + F_{L,W}^2}$$

ermittelt wird, wobei die gewünschte Seitenkraft $F_{S,W}$ sich aus

$F_{S,W} = mV_F\omega_{soll0}$ mit m = Fahrzeugmasse und die gewünschte Längskraft $F_{L,W}$ durch die Drosselklappenstellung $\alpha_{DK}$ oder den eingesteuerten Bremsdruck $P_{vor}$ gegeben ist und daß der Faktor x auf 1 begrenzt wird.

2. Verfahren nach Anspruch 1, dadurch gekennzeichnet, daß die resultierenden Reifenkräfte an den einzelnen Rädern ermittelt werden und daß zur Gewinnung von $F_{ges}$ die Summe der Reifenkräfte gebildet werden.

3. Verfahren nach Anspruch 1, dadurch gekennzeichnet, daß aus der Gesamtlängskraft $F_L$ und der Gesamtquerkraft $F_Q$ die Gesamtkraft $F_{ges}$ durch die Beziehung

$$F_{ges} = \sqrt{F_L^2 + F_Q^2}$$

ermittelt wird.

4. Verfahren nach Anspruch 3, dadurch gekennzeichnet, daß $F_L$ und $F_Q$ aus der Längs- bzw. Querbeschleunigung unter Berücksichtigung der Fahrzeugmasse m gewonnen werden.

5. Verfahren nach einem der Ansprüche 1 bis 4, dadurch gekennzeichnet, daß die Sollgiergeschwindigkeit erniedrigt wird, wenn die verfügbaren Kräfte für die gewünschte Bewegungsänderung nicht ausreicht.

6. Verfahren nach Anspruch 5, dadurch gekennzeichnet, daß der Faktor x vergrößert wird, wenn der Seitenkraftwunsch reduziert wird, jedoch die Seitenkraft klein gegenüber der Längskraft ist.

7. Verfahren nach einem der Ansprüche 1 bis 6, dadurch gekennzeichnet, daß $\omega_{soll0}$ auf einem Wert $\omega_B$ nach Maßgabe der Beziehung

$$\omega_B = a_Q / v_F$$

mit $a_Q$ = Querbeschleunigung begrenzt wird.

8. Verfahren nach einem der Ansprüche 1 bis 7, dadurch gekennzeichnet, daß der Giergeschwindigkeitssollwert $\omega_{soll}$ einer Teilpaßfilterung zur Phasenangleichung von $\omega$ und $\omega_{soll}$ unterworfen wird.

9. Verfahren nach einem der Ansprüche 1 bis 8, dadurch gekennzeichnet, daß bei zunehmenden Lenkwinkel das Sollgiergeschwindigkeitssignal durch ein differenzierendes Filter geleitet wird und daß das verstärkte Ausgangssignal $\omega_A$ des Filters dem Sollgiergeschwindigkeitssignal $\omega_{soll}$ überlagert wird.

## Claims

1. Method for controlling the vehicle stability in which the steering angle $\delta$, the yaw rate $\omega$, the vehicle velocity $v_F$ are determined and in which a steady-state required yaw rate $\omega_{soll0}$ is determined from the parameters $\delta$ and $v_F$ in accordance with the relationship

$$\omega_{soll0} = K \frac{v_F}{L(1+v_F^{\,2}/V_{ch}^{\,2})} \delta$$

where $V_{ch}$ is a vehicle characteristic velocity and L is the wheel base, and in which the required value of the yaw rate $\omega_{soll}$ is compared with the yaw rate $\omega$ which has been determined and, with the aid of the deviation $\Delta\omega$, the yaw rate is influenced in the sense of matching it to the required yaw rate, characterized in that a factor x is determined by means of which the steady-state yaw rate $\omega_{soll0}$ is multiplied in order to gain the required yaw rate $\omega_{soll}$, in that the factor x is determined by means of the relationship

$$x = \frac{F_{ges}}{F_{ges,W}}$$

where $F_{ges}$ is the available total force between the tyres and the road and $F_{ges,W}$ is the total force desired by the driver, in that $F_{ges,W}$ is determined by means of the relationship

$$F_{ges,W} = \sqrt{F_{S,W}^{\,2} + F_{L,W}^{\,2}}$$

where the desired side force $F_{S,W}$ is given by

$$F_{S,W} = mV_F\omega_{soll0}$$

where m = vehicle mass and the desired longitudinal force $F_{L,W}$ is given by the throttle butterfly position $\alpha_{DK}$ or the selected brake pressure $P_{vor}$ and in that the factor x is limited to 1.

2. Method according to Claim 1, characterized in that the resultant tyre forces at the individual wheels are determined and in that the sum of the tyre forces is formed in order to gain $F_{ges}$.

3. Method according to Claim 1, characterized in that the total force $F_{ges}$ is determined from the total longitudinal force $F_L$ and the total transverse force $F_Q$ by means of the relationship

$$F_{ges} = \sqrt{F_L^{\,2} + F_Q^{\,2}}$$

4. Method according to Claim 3, characterized in that $F_L$ and $F_Q$ are gained from the longitudinal and transverse accelerations while taking account of the vehicle mass m.

5. Method according to one of Claims 1 to 4, characterized in that the required yaw rate is reduced when the available forces do not suffice for the desired change in motion.

6. Method according to Claim 5, characterized in that the factor x is increased when the wish for side force is reduced but the side force is small relative to the longitudinal force.

7. Method according to one of Claims 1 to 6, characterized in that $\omega_{soll0}$ is limited to a value $\omega_B$ as required by the relationship

$$\omega_B = a_Q / v_F$$

where $a_Q$ = transverse acceleration is limited.

8. Method according to one of Claims 1 to 7, characterized in that the required yaw rate value $\omega_{soll}$ is subjected to low-pass filtering to match the phases of $\omega$ and $\omega_{soll}$.

9. Method according to one of Claims 1 to 8, characterized in that with increasing steering angle, the required yaw rate signal is fed through a differentiating filter and in that the amplified output signal $\omega_A$ of the filter is superimposed on the required yaw rate signal $\omega_{soll}$.

## Revendications

1. Procédé de régulation de la stabilité d'un véhicule selon lequel on détermine l'angle de braquage $\delta$, la vitesse de lacet $\omega$, la vitesse du véhicule $v_F$ et à partir des grandeurs $\delta$ et $v_F$ on détermine une vitesse de consigne de lacet stationnaire $\omega_{consigne0}$ selon la relation :

$$\omega_{consigne0} = K \frac{v_F}{L(1+v_F^{\,2}/v_{ch}^{\,2})} \cdot \delta$$

dans laquelle, $v_{ch}$ est une vitesse caractéristique du véhicule et L la distance des roues, et on compare la valeur de consigne de la vitesse de lacet $\omega_{consigne}$ à la vitesse de lacet $\omega$ obtenue, et à l'aide de la déviation $\Delta\,\omega$ on influence la vitesse de lacet dans le sens d'un rapprochement à la vitesse de consigne de lacet,
caractérisé en ce que
on forme un coefficient x par lequel on multiplie la vitesse de lacet stationnaire $\omega_{consigne0}$ pour obtenir la vitesse de consigne de lacet $\omega_{consigne}$, le coefficient x étant égal au rapport suivant :

$$x = \frac{F_{totale}}{F_{totale,W}}$$

dans lequel, $F_{totale}$ représente la force totale disponible entre les pneumatiques et la chaussée et $F_{totale,W}$ représente la force totale souhaitée par le conducteur, on détermine $F_{totale,W}$ par la relation :

$$F_{totale,W} = \sqrt{F_{S,W}^2 + F_{L,W}^2}$$

la force latérale souhaitée $F_{S,W}$ étant obtenue par la formule suivante : $F_{S,W} = mV_F\ \omega_{consigne0}$ dans laquelle m représente la masse du véhicule et $F_{L,W}$ la force longitudinale souhaitée que l'on obtient par la position $\alpha_{DK}$ du papillon d'étranglement d'air ou par la pression de frein $P_{amont}$, commandée, et le facteur x est inférieur à 1.

**2.** Procédé selon la revendication 1, caractérisé en ce que on détermine les forces résultantes des pneumatiques au niveau des différentes roues et pour obtenir $F_{totale}$ on forme la somme des forces des pneumatiques.

**3.** Procédé selon la revendication 1, caractérisé en ce que on détermine la force totale $F_{totale}$ à partir de la force longitudinale totale $F_L$ et de la force transversale totale $F_Q$ selon la relation :

$$F_{totale} = \sqrt{F_L^2 + F_Q^2}$$

**4.** Procédé selon la revendication 3, caractérisé en ce que on obtient $F_L$ et $F_Q$ à partir de l'accélération longitudinale et de l'accélération transversale en tenant compte de la masse m du véhicule.

**5.** Procédé selon l'une des revendications 1 à 4, caractérisé en ce que on diminue la vitesse de consigne de lacet si la force disponible n'est pas suffisante pour la variation de mouvement souhaitée.

**6.** Procédé selon la revendication 5, caractérisé en ce que on augmente le coefficient x si le souhait de force latérale est réduit, mais que néanmoins la force latérale est faible par rapport à la force longitudinale.

**7.** Procédé selon l'une des revendications 1 à 6, caractérisé en ce que on limite le signal $\omega_{consigne0}$ à la valeur $\omega_B$ selon la relation suivante :

$$\omega_B = a_Q / v_F$$

dans laquelle $a_Q$ est l'accélération transversale.

**8.** Procédé selon l'une des revendications 1 à 7, caractérisé en ce que on soumet la valeur de consigne de la vitesse de lacet $\omega_{consigne}$ à un filtrage passe-bas pour égaliser la phase de $\omega$ et de $\omega_{consigne}$.

**9.** Procédé selon l'une des revendications 1 à 8, caractérisé en ce que lorsque l'angle de braquage augmente, on fait passer le signal de vitesse de consigne de lacet dans un filtre différentiateur et en ce que l'on combine le signal $\omega_A$ amplifié du filtre au signal de vitesse de consigne de lacet $\omega_{consigne}$.

1
2
3
4
5
6
7
δ
$a_q$
$V_F$
$\alpha_{BR}$
$P_{vor}$
$F_{ges}$
W
L
$V_{ch}$
K
$W_{soll0}$
8
$W_B$
9
$F_{L/W}$
10
11
$F_{S,W}$
m
22
$B_{zg}$
12
$F_{ges,W}$
13
TP
14
X
15
DF
16
+
17
$W_{soll}$
18
19
20
21